# EUROPEAN PATENT APPLICATION

(11) **EP 1 270 527 A1**
(43) Date of publication of application: **02.01.2003**
(21) Application number: 00987780.4
(22) Date of filing: 27.12.2000
(51) Int. Cl.: C03C 21/00, C03C 17/42, A01N 59/16, A01N 25/00, C04B 41/86, G01N 23/227

(54) **PRODUCT HAVING GLASS LAYER AND METHOD FOR ASSESSING THE SAME**

(30) Priority: 14.01.2000 JP 2000006561; 14.01.2000 JP 2000006572; 06.09.2000 JP 2000269275
(71) Applicant: Inax Corporation, Tokoname-shi, Aichi 479-8585 (JP)
(72) Inventor: KUNO, Hiroaki, Inax Corporation, Tokoname-shi, Aichi 479-8585 (JP); IMAI, Shigeo, Inax Corporation, Tokoname-shi, Aichi 479-8585 (JP); MIYAMOTO, Hiroyuki, Inax Corporation, Tokoname-shi, Aichi 479-8585 (JP); MATSUMOTO, Arata, Inax Corporation, Tokoname-shi, Aichi 479-8585 (JP); ITOU, Shinji, Inax Corporation, Tokoname-shi, Aichi 479-8585 (JP); MORITA, Takahiro, Inax Corporation, Tokoname-shi, Aichi 479-8585 (JP); SUGIYAMA, Noriyuki, Inax Corporation, Tokoname-shi, Aichi 479-8585 (JP); YAMAMOTO, Shozo, Inax Corporation, Tokoname-shi, Aichi 479-8585 (JP); SUZUKI, Akihito, Inax Corporation, Tokoname-shi, Aichi 479-8585 (JP); HATTORI, Kazuhiko, Inax Corporation, Tokoname-shi, Aichi 479-8585 (JP); TOKUSHIMA, Shungo, Inax Corporation, Tokoname-shi, Aichi 479-8585 (JP); AIHARA, Yuuichirou, Inax Corporation, Tokoname-shi, Aichi 479-8585 (JP); YAMASHITA, Rui, Inax Corporation, Tokoname-shi, Aichi 479-8585 (JP); MIZUNO, Haruyuki, Inax Corporation, Tokoname-shi, Aichi 479-8585 (JP)
(74) Representative: Müller-Boré & Partner Patentanwälte
(86) International application number: JP0009370
(87) International publication number: WO01051426

(57) **Abstract**

Providing a product with a glass layer which can be manufactured at low costs and achieve an outstanding antibacterial effect. Accordingly, in the product comprising a base with the glass layer, the glass layer has at the surface side a rich layer containing a high concentration of Ag ion.

## Description

### TECHNICAL FIELD

The present invention relates to a product with a glass layer such as a glass product, ceramic product or enameled product having an antibacterial action, and a method of judging the product.

### BACKGROUND ART

It is known that an antibacterial metal such as Ag, Cu, Zn, etc. has an antibacterial property. Therefore, when a glass product, ceramic product or enameled product having an antibacterial action is manufactured, an antibacterial agent containing an antibacterial metal is generally dispersed in the glass layer simultaneously with manufacture of a substrate or formation of a glaze layer since an overall half-finished product before being given the antibacterial action is a glass layer or has a glass layer or glaze layer on a substrate.

In the product with the glass layer obtained as described above, the antibacterial agent in the glass layer acts on bacteria, destroying them or limiting multiplication of them.

### DISCLOSURE OF THE INVENTION

The antibacterial action is originally desired against bacteria on the surface of the glass layer in the product with the aforesaid general glass layer. However, the effect has been found low unless the concentration of the antibacterial agent to be dispersed in the glass layer is increased. Accordingly, since a large amount of antibacterial agent is consumed in order that an outstanding antibacterial action may be achieved, the manufacturing cost has been increased.

The present invention was made in view of the foregoing circumstances and the subject matter to be solved is to provide a product with a glass layer which can be manufactured at low costs and achieve an outstanding antibacterial effect.

The inventors made researches to solve the aforesaid subject matter. First, the antibacterial metal exists as a metal or compound in the glass layer since the antibacterial agent containing the antibacterial metal is only dispersed in the glass layer in the product with the aforesaid general glass layer, whereby the activity thereof has been found to be reduced. On the other hand, the inventors have found that the activity can be increased when the antibacterial metal exists in an ion state in the glass layer. The present invention was thus made.

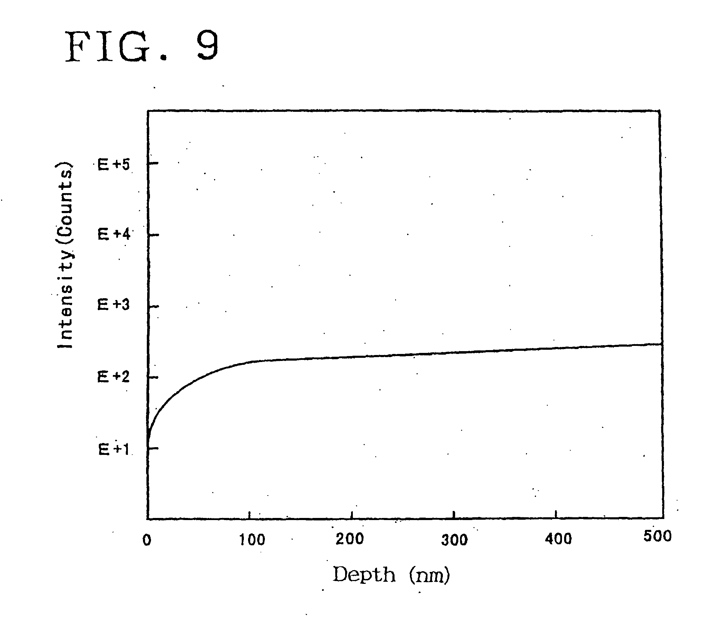

Further, in the product with the a fore said general glass layer, the concentration of the antibacterial metal is lowest on the surface of the glass layer and is gradually increased with increase in the depth of the layer, as typically shown in FIG. 9. Further, in the product having such a concentration curve, an outstanding antibacterial action cannot be achieved against the bacteria on the surface of the glass layer unless the concentration of the antibacterial agent dispersed in the glass layer is rendered high. On the other hand, there is a product with a glass layer in which the concentration of the antibacterial agent is highest in the surface thereof and is gradually reduced with increase in the depth of the layer. In such a product, an outstanding antibacterial action can be achieved against the bacteria on the surface of the glass layer even when the concentration of the used antibacterial agent is not so high. The present invention was thus made.

Namely, the product with a glass layer in accordance with the present invention comprises a substrate with a glass layer and is characterized in that an antibacterial metal ion obtained by ion exchange from an alkali metal ion or alkali earth metal ion in the glass layer exists in the glass layer.

In the product of the present invention, the antibacterial metal exists as the antibacterial metal ion obtained by ion exchange from the alkali metal ion or alkali earth metal ion in the glass layer. Accordingly, the activity of the antibacterial metal is high. As a result, an outstanding antibacterial action can be achieved against the bacteria on the surface of the glass layer unless the concentration of the antibacterialagent to be used is increased. Consequently, the concentration of the antibacterial agent can be reduced and the consumption of a large amount of antibacterial agent can be avoided.

The antibacterial agent preferably forms a rich layer having a high concentration on the surface of the glass layer. The reason for this is that the antibacterial action is generally desired against the bacteria on the surface of the glass layer.

Further, a product with a glass layer in accordance with the invention is characterized by a substrate having a glass layer and in that the glass layer has on a surface thereof a rich layer containing a high concentration of an antibacterial metal and that the concentration of the antibacterial metal is highest at the surface side and is gradually reduced with increase in a depth of the layer.

Since the product of the invention has on the surface of the glass layer the rich layer containing a high concentration of an antibacterial metal, the antibacterial metal acts on bacteria, whereupon the bacteria can be destroyed or multiplication of them can be limited. In this case, the concentration of the antibacterial metal is highest at the surface side and is gradually reduced with increase in a depth of the layer. According to the results of experiments conducted by the inventors, an outstanding antibacterial action can be achieved against the bacteria on the surface of the glass layer unless the concentration of the antibacterial agent to be used is increased. Consequently, the consumption of a large amount of antibacterial agent can be avoided.

According to the results of experiments conducted by the inventors, the alkali metal ion or alkali earth metal ion is changed by an ion exchange to the antibacterial metal ion only when the antibacterial agent is caused to come into contact with the glass layer of the substrate, so that the antibacterial metal ion is taken into the glass layer. An amount of antibacterial metal ion to be substituted in the glass layer can depend upon adjustment of the concentration, contact temperature and contact time of the antibacterial agent. Consequently, the antibacterial metal ion is not diffused uniformly over the entire glass layer, and the product has on the surface side of the glass layer the rich layer containing a high concentration of antibacterial metalion obtained by the ion exchange.

Accordingly, the presence of useless antibacterial metal ion inside the rich layer can be prevented and useless consumption of antibacterial metal ion can be avoided.

A glass product, ceramic product or enameled product can be employed as the substrate having the glass layer. Tiles or sanitary earthen ware can be employed as the ceramic product.

As the antibacterial agent, an antibacterial metal by way of evaporation, fine powder of antibacterial metal, colloid containing antibacterial metal or solvent obtained by dissolving the antibacterial metal with ion can be employed. As the antibacterial metal, Ag, Cu, Zn etc. can be employed. More specifically, the antibacterial metal is an organic silver-copper compound, silver-and-copper inorganic compound and includes (1) silver, copper, silver-copper alloy, (2) silver phosphate, silver nitrate, silver chloride, silver sulfide, silver oxide, silver sulfate, silver citrate, silver lactate, (3) cuprous phosphate, cupric phosphate, organic copper compound, cuprous chloride, cupric chloride, cuprous sulfide, cuprous oxide, cupric oxide, cupric sulfide, cuprous sulfate, cupric sulfate, copper citrate, copper lactate, etc. Further, zinc is in the same way an organic zinc compound or zinc inorganic compound and includes zinc, zinc oxide, zinc chloride, zincsulfide, zinc sulfate, zinc lactate, etc. Each of these antibacterial metals may be a simple substance, alloy or compound. However, the contact temperature needs to be decreased and the contact time needs to be shortened so that the ion exchange may be carried out by way of contact. For this purpose, a colloid or solution in which the size of the antibacterial metal with a high dissolution is smaller is preferably employed. More preferably, a solution of silver nitrate or silver sulfate is employed. The size of the antibacterial metal is larger than atom in the colloid, whereas the size of the antibacterial metal is equal to that of atom. A solution obtained by dissolving the antibacterial metal in ion can be realized as a treatment liquid containing antibacterial metal ion and solvent. Further, the colloid preferably contains a large amount of fine particles, and the solution preferably dissolves a high concentration of antibacterial metal ion.

According to a practical method, the concentration of the antibacterial metal on the surface is twice or more as high as the concentration of the antibacterial metal 10 nm inside the surface. According to the results of experiments conducted by the inventors, a sufficient antibacterial action can be achieved from the above.

In the product of the present invention, the glass layer preferably contains an antibacterial metal inside the rich layer. In this case, the concentration of the antibacterial metal is substantially uniform with respect to a direction of the depth. Consequently, an initial action of the antibacterial metal can be achieved by the ion exchange carried out from the surface side of the glass layer. Further, the durability can be improved as compared with a case where an antibacterial metal, which can achieve its effective action only by the ion exchange carried out from the surface side of the glass layer, is taken into the glass layer, and an amount of antibacterial metal to be consumed is decreased such that the manufacturing cost can be reduced.

More specifically, when the antibacterial metal is taken into the glass layer only by the ion exchange carried out from the surface side of the glass layer, the aforesaid rich layer is formed on the surface side of the glass layer. According to the results of an experiment conducted by the inventors, such a rich layer has a concentration which has a peak at the surface side and is inversely proportionally reduced toward an inside. Accordingly, when it is taken into consideration that abrasion progresses from the surface to a certain extent after use, an effective action cannot be achieved only by the metal of the rich layer unless an ion exchange is caused in a large amount of antibacterial metal to increase the concentration of the antibacterial metal inside the surface side. Accordingly, in this case, the improvement in the durability and the reduction in the manufacturing cost cannot simultaneously be achieved.

On the other hand, when the glass layer previously contains an antibacterial metal, the results of an experiment conducted by the inventors show that the concentration of the antibacterial metal is lowest at the surface side and is gradually increased toward the inside, showing a tendency to be saturated. In this case, accordingly, when wear has progressed to a certain degree from the surface after use, a large amount of antibacterial metal is contained in the glass layer so that the saturation concentration is increased to a certain degree. If not, an effective action cannot be achieved only by the antibacterial metal. In this case, accordingly, it is difficult to achieve an action of the antibacterial metal at an initial stage.

However, when the antibacterial metal is previously contained in the glass layer and the ion exchange is conducted from the surface side of the glass layer so that the antibacterial metal is taken into the glass layer, a rich layer is formed at the surface side of the glass layer, and the antibacterial metal saturated substantially at the same concentration as that of the rich layer can be contained in the glass layer. That is, the glass layer of the substrate contains the antibacterial metal inside the rich layer. As a result, the rich layer achieves an eminent action of antibacterial metal before wear from the surface immediately after use. When wear has progressed to a certain degree from the surface after use, the inner antibacterial metal achieves an eminent action. Consequently, the action of the antibacterial metal can be achieved at the initial stage, and an improvement of durability and reduction of manufacturing cost can be achieved simultaneously.

The product with a glass layer in accordance with the invention can be made by the aforesaid ion exchange as a first method and further by the following second and third methods.

In the second method, the antibacterial metal is caused to adhere to the surface of the glass layer of the substrate and thereafter, laser beams are irradiated onto the antibacterial metal. According to the results of experiment conducted by the inventors, a rich layer of antibacterial metal is produced on the surface of the glass layer by the action of laser beams in the product with an antibacterial function made by the second method, whereupon the antibacterial performance can exceedingly be improved.

In the third method, a first glaze and a second glaze are prepared. The first glaze can form a first glass layer on the surface of the substrate, whereas the second glaze can form on the surface of the substrate a second glass layer containing an antibacterial metal. On the surface of the substrate are formed a first glaze layer consisting the first glaze and a second glaze layer consisting the second glaze and located closer to the substrate surface than the first glaze. The first and second glaze layers are melted such that first and second glass layers are formed. According to the results of experiment conducted by the inventors, in the product with the antibacterial function made by the above-described method, a rich layer of the antibacterial metal is formed on the surface of the glass layer without use of a large amount of antibacterial agent, whereby the antibacterial performance can exceedingly be improved.

In the product of the invention, the glass layer is preferably formed with a water-repellent layer at the surface side thereof, the water-repellent layer containing a water-repellent component. As a result, the surface of the glass layer has both of the antibacterial and water-repellent functions. Even when water used contains such a large amount of stain component that the antibacterial effect achieved by the antibacterial function alone becomes insufficient, the water-repellent function prevents the stain from remaining, whereby a sufficient antibacterial effect can be achieved.

As a method of forming at the surface side of the glass layer the water-repellent layer containing the water-repellent component, a treatment by a water-repellence treatment liquid can be employed. The water-repellence treatment liquid has a silicon-containing functional group combining with a hydroxyl group on the surface of the glass layer by dehydration or dehydrogenation. When the treatment is carried out, the silicon-containing functional group combines with the hydroxyl group (-OH) on the surface of the glass layer by the dehydration or dehydrogenation, thereby shielding the hydroxyl group. Accordingly, even when used water contains a large quantity of metal ion such as soluble silica, the hydroxyl group is already disabled or ineffective such that the hydroxyl group does not combine with any metal ion and accordingly with any component of human waste etc. Particularly even when used water contains soluble silica as the metal ion, the soluble silica is not deposited or is not apt to be deposited as silicic acid with network structure such that stain is not apt to be incorporated. Thus, if the water-repellence treatment liquid has the silicon-containing functional group, stain such as human waste is prevented from adhering to the product even when it is used with water containing a large quantity of metal ion such as soluble silica, whereupon the product can easily be cleaned.

The silicon-containing functional group does not preferably combine with another silicon-containing functional group. According to the results of experiment conducted by the inventors, high scale, hairdye, wear and alkali resistances can be improved. If the silicon-containing functional groups of the stain resistant agent combine with each other, silica is increased such that silicic acid with the network structure is deposited on the layer. Stain can be considered to be incorporated with the silicic acid.

Further, the water-repellence treatment liquid preferably contains a terminal carbon fluoride group combining with silicon-containing functional group. The results of experiment conducted by the inventors show that the stain resistance also appears as water repellency by a small critical surface tension of the carbon fluoride group. Consequently, high scale, hairdye, wear and alkali resistances can be achieved. The carbon fluoride group is preferably -CₙF₂ₙ₊₁ where n is a natural number in a range of 1≤n≤12. The results of experiment conducted by the inventors show that this increases fluoride and accordingly fluorosilane. Consequently, scale, hairdye, wear and alkali resistances can be improved.

Further, the water-repellence treatment liquid may not contain a terminal alkyl group combining with the silicon-containing functional group. The results of experiment conducted by the inventors show that scale, hairdye and alkali resistances can be improved.

On the other hand, the water-repellence treatment liquid may contain a terminal alkyl group combining with the silicon-containing functional group. The results of experiment conducted by the inventors show that the stain resistance also appears as lipstick stain and alkali resistances by a large critical surface tension of the alkyl group.

From the viewpoint of the wear resistance, a methyl group may be employed as the alkyl group. On the other hand, a propyl or hexyl group may be employed as the alkyl group from the viewpoint of alkali resistance. The results of experiment conducted by the inventors show that when the alkyl group is a propyl or hexyl group, the alkyl group is increased. The water-repellence treatment liquid is advantageous in the alkali resistance but disadvantageous in the wear resistance. On the other hand, when the alkyl group is a methyl group, the water-repellence treatment liquid is advantageous in the wear resistance but disadvantageous in the alkali resistance.

A quantity of the alkyl group is preferably larger than a quantity of the carbon fluoride group when the water-repellence treatment liquid contains a terminal carbon fluoride group combining with the silicon-containing functional group and a terminal alkyl group combining with said silicon-containing functional group. The results of experiment conducted by the inventors show that the water-repellence treatment liquid does not contain only perfluoroalkylsilane. Consequently, the water-repellence treatment liquid has high lipstick stain and wear resistances.

On the other hand, a quantity of the carbon fluoride group is preferably larger than a quantity of the alkyl group when the water-repellence treatment liquid contains a terminal carbon fluoride group combining with the silicon-containing functional group and a terminal alkyl group combining with said silicon-containing functional group. The results of experiment conducted by the inventors show that this increases perfluoroalkylsilane, resulting in high scale, hairdye, wear and alkali resistances.

The silicon-containing functional group and the alkyl group are preferably combined with each other by dimethyl siloxane (O-Si(CH₃)₂). The results of experiment conducted by the inventors show that this results in high scale, hairdye, wear and alkali resistances.

The dimethyl siloxane preferably contains a straight chain combination of a silicon-containing functional group and an alkyl group or an annular combination of the silicon-containing functional group and the alkyl group. The results of experiment conducted by the inventors show that this results in stably high scale, hairdye, wear and alkali resistances. As one example of the straight chain combination of the silicon-containing functional group and the alkyl group, a stain resistant agent containing a mixture of a first agent and a second agent described in Japanese Patent Application Publication No. 8-209118 (1996) may be employed. The first agent is a co-hydrolysate of an organic silicon compound containing a perfluoroalkyl group and a methylpolysiloxane compound containing a hydrolytic group in a hydrophilic solvent, whereas the second agent is a mixture of organopolysiloxane and a strong acid. More specifically, the first agent is a co-hydrolysate of C₈F₁₇CH₂CH₂Si(OCH₃)₃ and Si(CH₃O)₃CH₂CH₂-(Si(CH₃)₂O)₁₀-Si(CH₃)₂CH₂CH₂Si(OCH₃)₃ in a hydrophilic solvent containing a solution of 0.1N-hydrochloric acid, t-butanol and hexane. The second agent is a mixture of HO-(Si(CH₃)₂O)₃₀-Si(CH₃)₂OH and methanesulfonic acid.

Further, the inventors completed a method of judging the product in accordance with the invention. More specifically, the method of judging a product comprising a substrate having a glass layer containing an antibacterial metal is characterized by the step of analyzing the glass layer by an X-ray photoelectron spectroscopy, thereby judging that the antibacterial metal of the glass layer exists in an ion state by an ion exchange from an alkali metal ion or an alkali earth metal ion in the glass layer.

In this judgment, it may also be judged that the antibacterial metal ion forms on a surface of the glass layer a rich layer having a high concentration.

Further, the method of judging a product comprising a substrate having a glass layer having on a surface thereof a rich layer containing a high concentration of antibacterial metal is characterized by the step of analyzing the concentration of the antibacterial metal of the rich layer by an X-ray photoelectron spectroscopy, thereby judging that the concentration of the antibacterial metal is highest at the surface side and is gradually reduced with increase in a depth of the layer.

The product judging method of the invention needs to measure the concentration distribution of the antibacterial metal of the rich layer in the direction of depth within several hundred nm. Accordingly, the method uses the X-ray photoelectron spectroscopy which is superior in the resolution in such a depth direction. According to this method, the state analysis of the antibacterial metal can be carried out as well as the concentration distribution of the antibacterial metal in the direction of depth. The results of experiment conducted by the inventors show that a more accurate judgment concerning the antibacterial function can be made by the state analysis in the X-ray photoelectron spectroscopy since the antibacterial function differs depending upon whether the antibacterial metal in the glass layer is in an atomic state or an ionic state. Further, the product judging method of the invention may be applied to the product of the invention in which the glass layer is formed with a water-repellent layer at the surface side thereof, the water-repellent layer containing a water-repellent component.

### BIREF DESCRIPTION OF THE DRAWINGS

FIG. 1 is a schematic section of a substrate employed in Experiment 1 and an embodiment of the present invention;
FIG. 2 is an enlarged schematic section of a sample of the product employed in Experiment 1 and the embodiment of the present invention;
FIG. 3 is an enlarged schematic section of samples D and E of products of compared case in Experiment 1;
FIG. 4 is an enlarged schematic section of the sample of the product employed in the embodiment;
FIG. 5 is an enlarged schematic section of the sample of the product employed in the embodiment;
FIG. 6 is an enlarged schematic section of the sample of the product employed in the embodiment;
FIG. 7 is a graph showing the results of measurement of the concentration of Ag contained in the glass layer in Experiment 2;
FIG. 8 is a schematic graph showing the results of measurement of the concentration of Ag contained in the glass layer in Experiment 2; and
FIG. 9 is a schematic graph showing the results of measurement of the concentration of Ag contained in the glass layer obtained by a conventional method.

### BEST MODE FOR ENFORCEMENT OF THE INVENTION

### (Experiment 1)

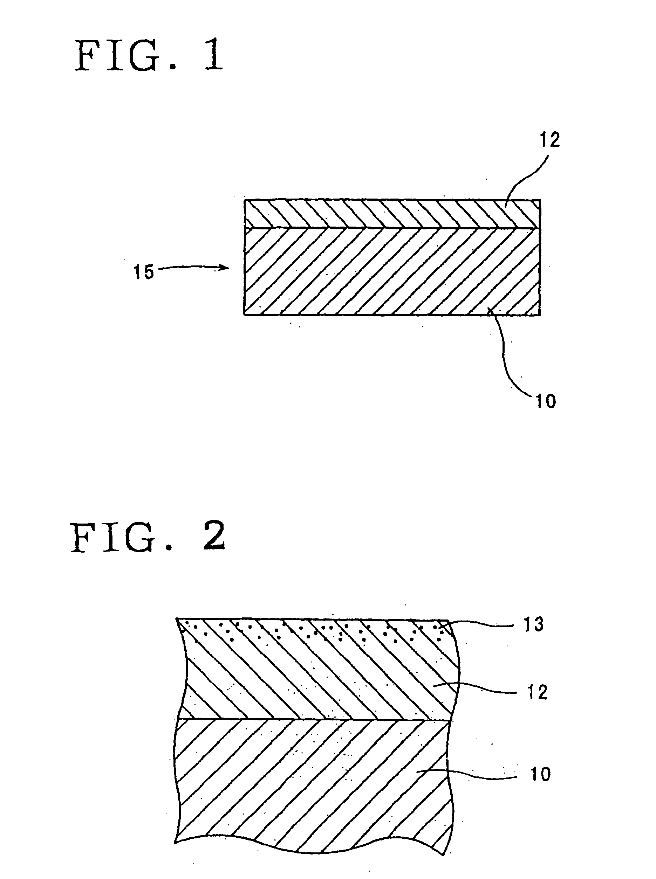

A substrate 15 which is a semifinished sanitary ware is prepared as shown in FIG. 1. The substrate 15 has on a surface of a base 10 a glass layer 12 consisting of a glaze with the following composition The glass layer 12 has a glass transition point of 700°C

### <Mix proportion of the glaze (weight %)>

feldspar: 53.7
silica sand: 9.8
lime: 12.3
dolomite: 4.8
gairome clay: 5.1
flowers of zinc: 2.0
zircon: 10.1
frit: 2.2

The substrate 15 was cut into 15 test pieces each of which is 50±2 mm square (thickness of not more than 10 mm). Apretreatment including the following steps was carried out for each test piece.

First step: The surface of the glass layer 12 is cleaned with a sponge with neutral detergent soaked therein.

Second step: The surface of the glass layer 12 is rinsed in service water and distilled water in turn.

Third step: The overall test piece is cleaned in distilled water by ultrasonic cleaning for 10 minutes and thereafter rinsed in distilled water. The operation is repeated three times.

Fourth step: The test piece is put in a glass Petri dish to be dried by a desiccator (for about 12 hours).

Fifth step: The surface of the glass layer 12 is softly wiped by absorbent cotton with ethanol soaked therein or unwoven cloth.

Sixth step: An aqueous solution of silver nitrate (AgNO₃) at 30°C is prepared as a treating liquid serving as the antibacterial agent, and the test piece is completely immersed in the treating liquid for one second.

Seventh step: The overall glass layer 12 of the test piece is cleaned with distilled water.

Eighth step: The overall test piece is cleaned in distilled water by ultrasonic cleaning for 10 minutes and thereafter rinsed in distilled water.

Ninth step: The test piece is put in a glass Petri dish to be dried by a desiccator (for about 12 hours).

The test piece for which the concentration of the aqueous solution of silver nitrate is 0.10 mol/L at the sixth step is referred to as sample A. The test piece for which the concentration of the aqueous solution of silver nitrate is 0.20 mol/L at the sixth step is referred to as sample B. The test piece for which the concentration of the aqueous solution of silver nitrate is 0.40 mol/L at the sixth step is referred to as sample C. Five pieces are prepared for every one of the test piece A, B and C.

Other than the test pieces A to C treated through the aforesaid steps, silver powder (not less than 99% silver and average grain diameter of 10 µm) serving as the antibacterial agent is added into the glaze to be applied to the base 10, and thereafter, the fired test piece is manufactured. At this time, the test piece containing 0.5 weight % antibacterial agent is referred to as test piece D. Further, the test piece containing 5.0 weight % antibacterial agent is referred to as test piece E. Five test pieces D and five test pieces E are prepared.

With respect to surfaces of the glass layers 12 of test pieces A to E, measurement of silver concentration (atom %) was carried out by XPS (X-ray photoelectron spectroscopy) and an antibacterial performance test was carried out by way of film adherence.

In XPS, focusing soft X-rays dispersed by a curved monocrystal are irradiated onto the surface of the glass layer 12 of each test piece placed in vacuum. Photoelectron out of the surface is detected by an analyzer and obtained information is used for identification and measurement of elements. Element information of the surface is obtained from a bond energy value of a bound electron in a substance, and information about a value and a bond state is obtained from energy shift at each peak. Further, measurement can be carried out using a peak area.

TABLE 1 shows the results of silver concentration with respect to test pieces A to E. Symbol "#" designates "at or below detection limit." On the other hand, TABLE 2 shows the results of antibacterial performance test with respect to test pieces A to E.

**[TABLE 1]**

| Test piece | State of Ag | Depth from surface (nm) | | |
|---|---|---|---|---|
| | | 0 | 3 | 10 |
| A | Ion | 0.01 | # | # |
| B | Ion | 0.02 | # | # |
| C | Ion | 0.05 | # | # |
| D | Metal | 0.01 | 0.02 | 0.04 |
| E | Metal | 0.02 | 0.03 | 0.07 |

**[TABLE 2]**

| Test Piece | Colon bacillus (IFO3972) | Staphylococcus aureus (IFO3972) |
|---|---|---|
| | Before immersion in water | Before immersion in water |
| A | 5.5 | 4.8 |
| B | 5.5 | 4.8 |
| C | 5.5 | 4.8 |
| D | 2.8 | 2.3 |
| E | 3.0 | 2.6 |

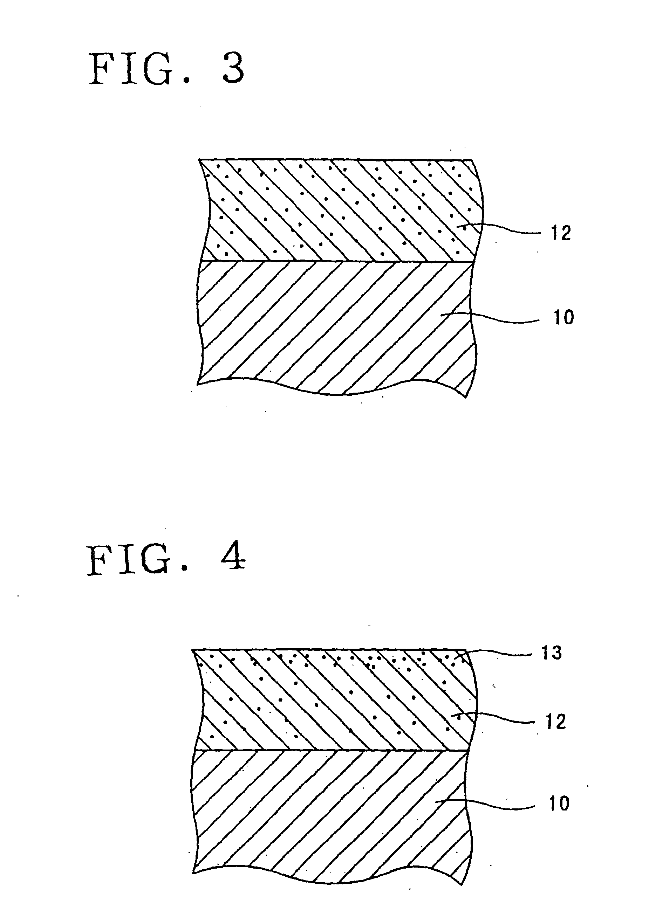

From TABLE 1, it is understood that each of the glass layers 12 of test pieces A to C has on the surface thereof a rich layer 13 containing high concentration of Ag in the ion state as shown in FIG. 2. It is considered that an ion exchange took place mainly between K ion and Ag ion both having respective ion radii approximate to each other. On the other hand, each of test pieces D and E has no rich layer as shown in FIG. 3 and Ag exists in the metal state even in the glass layer 12. From these results, it is found that Ag exists in the rich layer 13 of the glass layer 12 in the ion state when the antibacterial agent is diffused from the surface of each of test pieces A to C, whereas Ag exists in the overall glass layer 12 in the metal state when the antibacterial agent is added into the glaze.

Further, TABLES 1 and 2 show that Ag serving as the antibacterial metal has a higher activity in the ion state than in the metal state. Further, the surface of the glass layer 12 can have a sufficient antibacterial effect when Ag exists only in the surface of the glass layer 12. That is, Ag on the surface of the glass layer 12 acts on bacteria to destroy them or limits propagation of them. Accordingly, when existing in the ion state, Ag has an outstanding antibacterial effect on the bacterial on the surface of the glass layer 12 without increase in an amount thereof. Consequently, the consumption of an excessive amount of antibacterial agent can be avoided.

Accordingly, it is understood that the products of test pieces A to C can be manufactured at low costs and has an outstanding antibacterial effect.

### (Embodiment)

Fifty-five test pieces similar to that in the aforesaid experiment 1 were prepared from a base 15 similar to that in the aforesaid experiment 1. A pretreatment including the following steps was carried out for each test piece.

First to fifth steps: These are similar to those in the aforesaid experiment 1.

Sixth step: An aqueous solution of silver nitrate (AgNO₃) having a concentration of 0.30 mol/L is prepared as a treating liquid serving as the antibacterial agent, and the test piece is completely immersed in the treating liquid.

Seventh step: The overall glass layer 12 of the test piece is cleaned with distilled water.

Eighth step: The surface of the glass layer 12 of the test piece is heated up to 100°C and thereafter quenched to the level of the room temperature.

Ninth step: The overall test piece is cleaned in distilled water by ultrasonic cleaning for 10 minutes and thereafter rinsed in distilled water.

Tenth step: The test piece is put in a glass Petri dish to be dried by a desiccator (for about 12 hours).

In these first to tenth steps, the condition for the sixth step included the temperature at 10°C and the period of one second. A sample F refers to the test piece for which the condition for the sixth step included the temperature of 10°C and the period of one second and the eight step was not carried out. Further, sample G refers to the test piece for which the condition for the sixth step included the temperature of 30°C and the period of one second and the eight step was not carried out. Further, sample H refers to the test piece for which the condition for the sixth step included the temperature of 60°C and the period of one second and the eight step was not carried out. Sample I refers to the test piece for which the condition for the sixth step included the temperature of 60°C and the period of 1800 seconds and the eight step was not carried out. On the other hand, sample J refers to the test piece for which the condition for the sixth step included the temperature of 60°C and the period of 1800 seconds and the eight step was carried out. Eleven samples were prepared for each of the samples F to J.

Regarding each of samples F to J, the X-ray photoelectron spectroscopy test and the antibacterial performance test were carried out for eight samples. The antibacterial performance test was carried out for the other three samples after the following water-repellent treatment has been applied to the surfaces of the glass layers 12.

C₈F₁₇CH₂CH₂Si(OCH₃)₃ is prepared as an organic silicon compound containing a perfluoroalkyl group and Si(CH₃O)₃CH₂CH₂-(Si(CH₃)₂O)₁₀-Si(CH₃)₂CH₂CH₂Si(OCH₃)₃ is prepared as a methylpolysiloxane compound containing a hydrolytic group. A first agent is a co-hydrolysate of them in a hydrophilic solvent containing a solution of 0.1N-hydrochloric acid, t-butanol and hexane. As a result, each of C₈F₁₇CH₂CH₂Si(OCH₃)₃ and Si(CH₃O)₃CH₂CH₂-(Si(CH₃)₂O)₁₀-Si(CH₃)₂CH₂CH₂Si(OCH₃)₃ is considered to contain a silanol (Si-OH) group. On the other hand, a second agent is a mixture of organopolysiloxane (HO-(Si(CH₃)₂O)₃₀-Si(CH₃)₂OH) and methanesulfonic acid as a strong acid.

The second agent of 5 ml is added to the first agent of 5 ml to be applied to the surface of the sample and thereafter left for about 10 minutes to be dried. Subsequently, the surface is cleaned with ethanol and dried.

Thus, samples F to J are obtained each of which has at the surface side of the glass layer a water-repellent layer containing a water-repellent component.

With respect to samples F to J for which the water-repellent treatment was not carried out, measurement of silver concentration (atom %) was carried out for five of each of the samples by XPS (X-ray photoelectron spectroscopy). With respect to both samples F to J for which the water-repellent treatment was carried out and not carried out, an antibacterial performance test was carried out for three of each of the samples by way of film adherence.

TABLE 3 shows the results of silver concentration with respect to samples F to J for which the water-repellent treatment was not carried out. Symbol "#" designates "at or below detection limit." TABLE 4 shows the results of antibacterial performance test.

**[TABLE 3]**

| Sample | Depth from surface (nm) | | | | |
|---|---|---|---|---|---|
| | 0 | 3 | 10 | 30 | 100 |
| F | 0.01 | # | # | # | # |
| G | 0.06 | # | # | # | # |
| H | 0.07 | 0.01 | # | # | # |
| I | 0.46 | 0.04 | 0.03 | # | # |
| J | 0.24 | 0.07 | 0.06 | 0.02 | # |

**[TABLE 4]**

| Sample | Colon bacillus | (IFO3972) | Staphylococcus (IFO12732) | aureus |
|---|---|---|---|---|
| | Without water-repellent layer | With water-repellent layer | Without water-repellent layer | With water-repellent layer |
| F | 5.5 | 5.5 | 4.8 | 4.8 |
| G | 5.5 | 5.5 | 4.8 | 4.8 |
| H | 5.5 | 5.5 | 4.8 | 4.8 |
| I | 5.5 | 5.5 | 4.8 | 4.8 |
| J | 5.5 | 5.5 | 4.8 | 4.8 |

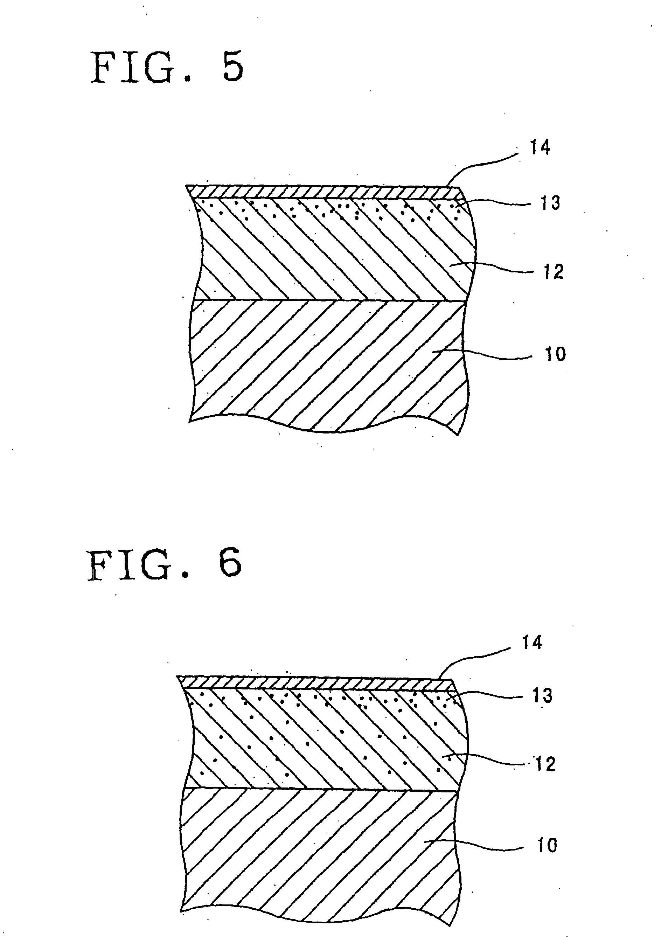

From TABLE 3, it is understood that since the Ag ion is measured even in the inside regarding sample J as shown in FIG. 4, an ion exchange took place between K ion and Ag ion in the glass layer 12 of the base 15 by the contact with the treating liquid and the Ag ion further penetrates the inside of the glass layer 12 by the heating.

From TABLE 3, it is further understood that the concentration of Ag of the rich layer 13 is highest at the surface side and is gradually decreased in the direction of depth. Accordingly, even if the concentration of the treating liquid is not so high, Ag has an outstanding antibacterial effect on the bacterial on the surface of the glass layer 12. Consequently, consume of an excessive amount of antibacterial agent can be avoided. In particular, the concentration of Ag of the rich layer 13 of the glass layer 12 of each of the samples F to J is twice as high as that of Ag 10 nm inside from the surface or more such that a sufficient antibacterial effect is obtained.

Further, TABLE 4 shows that the antibacterial effect is not almost reduced even when the water-repellent treatment was carried out on the surface of the glass layer 12 as compared with the case where the water-repellent treatment was not carried out. The reason for this is that even when the water-repellent layer 14 is formed on the glass layer 12 by the water-repellent treatment as shown in FIG. 5, the layer has a small thickness and combines only with the surface hydroxyl group such that the antibacterial effect transmits the water-repellent layer. Accordingly, when the water-repellent treatment has been carried out on the surface of the glass layer 12, both antibacterial and water-repellent functions are given to the surface of the glass layer 12. Consequently, even when water used contains so much stain component that the antibacterial effect only by the antibacterial function becomes insufficient, the water-repellent function prevents the stain from remaining such that a sufficient antibacterial effect can be achieved.

Accordingly, it is understood that the product of the embodiment can be manufactured at low costs and has an outstanding antibacterial effect.

### (Experiment 2)

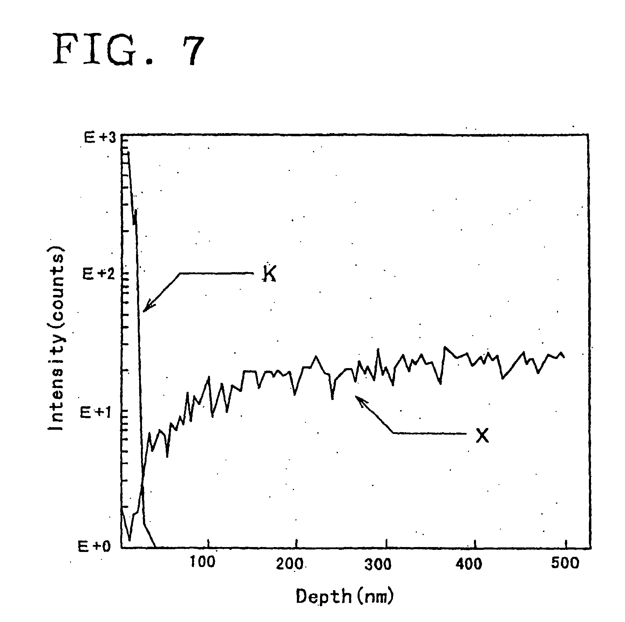

A test piece K was made which has a glass layer 12 into which Ag was taken only by the ion exchange carried out from the surface side of the layer. The concentration of Ag in the glass layer 12 was measured by the XPS method so that the relation between the depth (nm) from the surface and a concentration index (Intensity (Counts)) by naturalized logarithm was obtained. FIG. 7 shows the results. In the figure, K shows the results of measurement with respect to the test piece K. X shows the results of measurement with respect to what was obtained by applying to the base 10 a glaze previously containing Ag₃PO₄ as the antibacterial agent according to the conventional method and then firing the base.

From FIG. 7, it is understood that the concentration of Ag is lowest on the surface of the glass layer 12 and is gradually increased in the direction of the depth thereof in the case of X by the conventional method. That is, the concentration of Ag is rendered lower as the surface of the glass layer 12 gets near.

On the other hand, in the case of test piece K, it is understood that an Ag ion has been taken in and that the concentration of the Ag ion becomes higher as the surface of the glass layer 12 gets near. That is, in the case of the test piece K, the glass layer 12 has on the surface thereof a rich layer 13 containing high concentration of Ag as shown in FIG. 2. In the rich layer 13, the concentration of Ag is highest on the surface thereof and is gradually reduced in the direction of the depth. In detail, Ag has the concentration which has its peak at the surface side and is inversely decreased toward the inside.

### (Experiment 3)

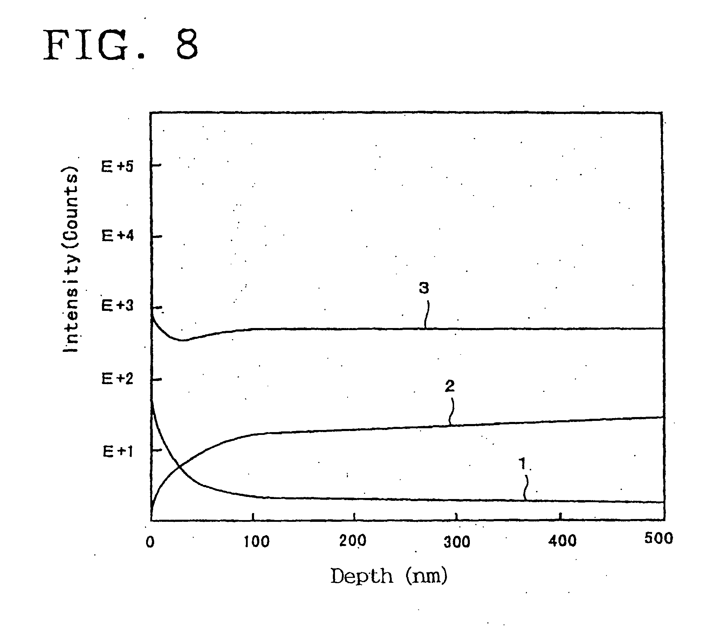

A test piece 1 is prepared in which Ag is taken into the glass layer 12 only by the ion exchange carried out from the surface side of the glass layer. A test piece 2 is prepared in which Ag is previously contained in the glass layer 12. A test piece 3 is prepared in which Ag is previously contained in the glass layer 12 and Ag is further taken into the glass layer by the ion exchange from the surface side of the glass layer. The concentrations of Ag in the glass layers 12 of the respective test pieces 1 to 3 were measured by the XPS method, and the relation between the depth (nm) from the surface and a concentration index (Intensity (Counts)) by naturalized logarithm was obtained. FIG. 8 shows the results.

As shown by the test piece 1 in FIG. 8, the rich layer 13 is formed at the surface side of the glass layer 12 when Ag is taken into the glass layer only by the ion exchange carried out from the surface side of the glass layer. In this respect, the test piece 1 is similar to the test piece K in FIG. 7.

On the other hand, as shown by the test piece 2 in FIG. 8, the concentration of Ag is lowest at the surface side and is gradually increased toward the inside when Ag is previously contained in the glass layer 12, showing a tendency to be saturated. In this respect, the test piece 2 is similar to the test piece X in FIG. 7.

Regarding the test piece 1, when it is taken into consideration that wear may progress from the surface after use, the concentration of Ag needs to be increased at the inside from the surface by the ion exchange of a large amount of Ag. If not, the antibacterial action cannot effectively be performed only by Ag in the rich layer 13. Accordingly, in this case, improvement in the durability and reduction in the manufacturing cost cannot be achieved simultaneously. On the other hand, in the test piece 2, unless a large amount of Ag is contained in the glass layer 12 to increase the saturation concentration when wear progresses from the surface after use, the antibacterial action cannot effectively be performed only by the Ag. Accordingly, it is difficult to perform the action of the metal at an initial stage.

Accordingly, as shown by the test piece 3 in FIG. 8, the rich layer 13 is formed at the surface side of the glass layer 12 and Ag saturated substantially at the same concentration as that of the rich layer 13 can be contained when Ag is previously contained in the glass layer 12 and Ag is further taken into the glass layer by the ion exchange from the surface side of the glass layer. That is, in the test piece 3, the glass layer 12 has on the surface thereof the rich layer 13 containing a high concentration of Ag, and Ag is also contained inside the rich layer, as shown in FIG. 4. In the glass layer 12 of the base 15, the concentration of Ag is substantially uniform in the direction of the depth. As a result, the rich layer 13 performs an outstanding antibacterial action before wear from the surface immediately after use. Further, when the wear progresses from the surface to a certain extent, the inner Ag can also perform the antibacterial action. Consequently, the action of Ag can be performed at the initial stage and the improvement in the durability and the reduction in the manufacturing cost can be achieved simultaneously.

Further, as shown in FIG. 6, the water-repellent treatment was applied to the surface of the glass layer 12 of the test piece 3 so that the water-repellent layer 14 was formed. The concentration of Ag in the glass layer 12 was measured by the XPS method, and the relation between the depth (nm) from the surface and a concentration index (Intensity (Counts)) by naturalized logarithm was obtained. A manner of water-repellent treatment was the same as in the case where the water-repellent treatment was applied to the test pieces F to J. As a result, the glass layer 12 has on the surface thereof a rich layer 13 containing a high concentration of Ag, and Ag was also contained inside the rich layer 13 as the test piece 3 in FIG. 8. Accordingly, the same effect was achieved as from the test piece 3, and the surface thereof has the water-repellent layer 14 as shown in FIG. 6. Consequently, even when water used contains so much stain component that the antibacterial effect only by the antibacterial function becomes insufficient, the water-repellent function prevents the stain from remaining such that a sufficient antibacterial effect can be achieved.

The foregoing embodiments are illustrative and the invention can be practiced in a mode to which various changes have been applied without departing from the scope of the invention.

### INDUSTRIAL APPLICABILITY

Accordingly, the product of the present invention can be manufactured at low costs and can achieve an outstanding antibacterial effect.

## Claims

1. A product with a glass layer **characterized by** a substrate having a glass layer and in that an antibacterial metal ion obtained by an ion exchange from an alkali metal ion or alkali earth metal ion in the glass layer exists in the glass layer.

2. A product with a glass layer according to claim 1, **characterized in that** the antibacterial metal ion forms a rich layer having a high concentration on the surface of the glass layer.

3. A product with a glass layer **characterized by** a substrate having a glass layer and in that the glass layer has on a surface thereof a rich layer containing a high concentration of an antibacterial metal and that the concentration of the antibacterial metal is highest at the surface side and is gradually reduced with increase in a depth of the layer.

4. A product with a glass layer according to claim 3, **characterized in that** the concentration of the antibacterial metal on the surface is twice or more as high as the concentration of the antibacterial metal 10 nm inside the surface.

5. A product with a glass layer according to claim 3 or 4, **characterized in that** the glass layer contains an antibacterial metal inside the rich layer.

6. A product with a glass layer according to claim 5, **characterized in that** the concentration of the antibacterial metal is substantially uniform with respect to a direction of the depth.

7. A product with a glass layer according to any one of claims 3, 4 and 6, **characterized in that** the glass layer is formed with a water-repellent layer at the surface side thereof, the water-repellent layer containing a water-repellent component.

8. A product with a glass layer according to claim 5, **characterized in that** the glass layer is formed with a water-repellent layer at the surface side thereof, the water-repellent layer containing a water-repellent component.

9. A method of judging a product comprising a substrate having a glass layer containing an antibacterial metal, **characterized by** the step of analyzing the glass layer by an X-ray photoelectron spectroscopy, thereby judging that the antibacterial metal of the glass layer exists in an ion state by an ion exchange from an alkali metal ion or an alkali earth metal ion in the glass layer.

10. A method of judging a product with a glass layer according to claim 9, **characterized in that** it is judged that the antibacterial metal ion forms on a surface of the glass layer a rich layer having a high concentration.

11. Amethod of judging a product comprising a substrate having a glass layer having on a surface thereof a rich layer containing a high concentration of antibacterial metal, **characterized by** the step of analyzing the concentration of the antibacterial metal of the rich layer by an X-ray photoelectron spectroscopy, thereby judging that the concentration of the antibacterial metal is highest at the surface side and is gradually reduced with increase in a depth of the layer.

12. Amethod of judging a product with a glass layer according to claim 11, **characterized in that** the glass layer is formed with a water-repellent layer at the surface side thereof, the water-repellent layer containing a water-repellent component.
